# EUROPÄISCHE PATENTSCHRIFT

(11) **EP 3 062 002 B1**
(45) Veröffentlichungstag und Bekanntmachung des Hinweises auf die Patenterteilung: **04.04.2018**
(21) Anmeldenummer: 15156614.8
(22) Anmeldetag: 25.02.2015
(51) Int. Cl.: F16K 11/074

(54) **Ventiloberteil**
Upper part of a valve
Partie supérieure de soupape

(43) Veröffentlichungstag der Anmeldung: 31.08.2016
(73) Patentinhaber: Flühs Drehtechnik GmbH, 58515 Lüdenscheid (DE)
(72) Erfinder: Lange, Lutz, 58511 Lüdenscheid (DE)
(74) Vertreter: Patentanwälte Dörner & Kötter PartG mbB

(56) Entgegenhaltungen:
- EP-A1- 0 577 164
- WO-A1-00/23168
- DE-U1-202005 003 127
- GB-A- 2 402 199
- US-A- 4 502 507

## Beschreibung

Die Erfindung betrifft ein Ventiloberteil für Sanitärarmaturen mit den Merkmalen des Oberbegriffs des Patentanspruchs 1.
In Sanitärarmaturen werden häufig Ventiloberteile eingesetzt, in denen eine Steuerscheibe sowie eine Durchlassscheibe aufweisende Scheibensteuerung angeordnet ist, welche über eine Spindel derart bedienbar ist, dass der Wasseraustritt über eine Drehung der Spindel steuerbar ist. Derartige austauschbare Ventiloberteile, wie sie beispielsweise in der DE 20 2005 003 127 U1 beschrieben sind, können in unterschiedlich gestalteten Armaturengehäusen eingesetzt werden. In zunehmendem Maße wird das aus einer Armatur zu entnehmende Wasser zuvor einem Filtermodul zugeführt, um dessen Qualität zu verbessern. Dabei ist das Filtermodul regelmäßig dem Ventiloberteil vorgeschaltet, weshalb das Filtermodul kontinuierlich mit Wasserdruck beaufschlagt ist. Hierdurch ist die Haltbarkeit des Filtermoduls beeinträchtigt.

WO00/23168 offenbart einen Ventiloberteil gemäß dem Oberbegriff des Anspruchs 1. Hier will die Erfindung Abhilfe schaffen. Der Erfindung liegt die Aufgabe zugrunde, ein Ventiloberteil zu schaffen, das die Zwischenschaltung eines Filtermoduls ermöglicht. Gemäß der Erfindung wird diese Aufgabe durch die Merkmale des kennzeichnenden Teils des Patentanspruchs 1 gelöst.
Mit der Erfindung ist ein Ventiloberteil geschaffen, das die Zwischenschaltung eines Filtermoduls ermöglicht. Dadurch, dass in der Steuerscheibe eine Vertiefung eingebracht ist, über die ein erster Einlasskanal für den Wasserleitungszulauf und der erste Auslaufkanal, der als Einlass für das Filtermodul einsetzbar ist, in einer Drehstellung der Steuerscheibe relativ zur Durchlassscheibe verbindbar ist, ist durch ein Verschließen des ersten Einlasskanals durch Verdrehen der Steuerscheibe relativ zur Durchlassscheibe gleichzeitig der Wasserzulauf in das Filtermodul unterbunden.

Aufgrund von äußeren Einflüssen, insbesondere Temperatur- und/oder Druckänderungen kann es dazu kommen, dass das in dem Filtermodul befindliche Wasser sich ausdehnt und ungewollt durch die Armatur austritt. Dieser Effekt der unter anderem auch bei Durchlauferhitzern bekannt ist, wird von vielen Anwendern als störend empfunden.

Vor diesem Hintergrund ist in Weiterbildung der Erfindung der zweite Auslaufkanal durch wenigstens ein in dem Kopfstück eingebrachtes seitliches Fenster gebildet, wobei in der Steuerscheibe ein Durchlasskanal eingebracht ist, über den der zweite Einlasskanal (Filterwasserzulauf) mit dem seitlichen Fenster des Kopfstücks in einer Drehstellung der Steuerscheibe verbindbar ist. Hierdurch ist der zweite Einlasskanal (Filterwasserzulauf), der mit dem Auslauf eines Filtermoduls verbindbar ist, über die Steuerscheibe verschließbar, wodurch ein ungewolltes Austreten von Wasser aus dem zweiten Auslaufkanal bzw. aus der Armatur verhindert ist.

In alternativer Ausgestaltung der Erfindung ist der zweite Auslaufkanal durch wenigstens ein in dem Kopfstück eingebrachtes seitliches Fenster gebildet, wobei in der Steuerscheibe (5) ein Durchlasskanal eingebracht ist, über den der zweite Einlasskanal mit dem seitlichen Fenster des Kopfstücks in einer Drehstellung der Steuerscheibe verbindbar ist. Auch hierdurch ist der zweite Einlasskanal, der mit dem Auslauf eines Filtermoduls verbindbar ist, über die Steuerscheibe verschließbar, wodurch ein ungewolltes Austreten von Wasser aus dem zweiten Auslaufkanal bzw. aus der Armatur verhindert ist.

In weiterer Ausgestaltung der Erfindung sind die Vertiefung und der Durchlasskanal bzw. die beiden Vertiefungen derart in der Steuerscheibe angeordnet, dass in einer Drehstellung der Steuerscheibe relativ zur Durchlassscheibe der zweite Einlasskanal geschlossen ist, während der zweite Auslaufkanal zumindest partiell geöffnet ist, wobei in einer weiteren Drehstellung sowohl der zweite Einlasskanal, als auch der zweite Auslaufkanal geschlossen sind. Hierdurch ist nach Verschließen des Leitungswasserzulaufs ein Druckausgleich des Filtermoduls über den zweiten Auslaufkanal bzw. die Armatur ermöglicht, bevor auch dieser nach weiterer Drehung der Steuerscheibe relativ zur Durchlassscheibe verschlossen ist. Gemäß der Erfindung weist die Durchlassscheibe auf ihrer der Steuerscheibe zugewandten Seite eine Vertiefung auf, welche einen die Mitte der Durchlassscheibe umgebenden mittleren Bereich an wenigstens einer Seite mit der Mantelfläche verbindet. Hierdurch ist eine Ableitung von zwischen Steuerscheibe und Durchlassscheibe befindlichen Schmutz- oder Fettrückständen bewirkt. Bevorzugt ist die Vertiefung derart ausgebildet ist, dass sie die Mantelfläche der Steuerscheiben an zwei beabstandet zueinander, vorzugsweise gegenüberliegend angeordneten Stellen durchdringt, wobei sie durch den mittleren Bereich der Steuerscheibe geführt ist.
In Ausgestaltung der Erfindung ist das Kopfstück aus Metall, vorzugsweise aus Messing hergestellt. Hierdurch ist eine Verformung des Kopfstücks durch die Vorspannung des Ventiloberteils gegen die Armatur auch über einen langen Zeitraum verhindert.
Gegenstand der Erfindung ist weiterhin eine Sanitärarmatur mit einem Ventilsitz, von dem ein Ventiloberteil der vorgenannten Art aufgenommen ist, wobei der Ventilsitz einen Leitungswasserzulauf- sowie einen Filtermodulzulauf- und einen Filtermodulauslaufanschluss aufweist, wobei der Leitungswasseranschluss mit dem ersten Einlasskanal, der Filtermodulzulaufanschluss mit dem ersten Auslaufkanal und der Filtermodulauslaufanschluss mit dem zweiten Einlasskanal des Bodenstücks des Ventiloberteils verbunden ist. Je nach Ausgestaltung des Ventiloberteils kann die Sanitärarmatur einen Wasserentnahmeanschluss aufweisen, der entweder mit einem in dem Bodenstück des Ventiloberteils angeordneten zweiten Auslaufkanal verbunden ist oder der als seitlicher Auslauf für aus dem seitlichen Fenster des Ventiloberteils austretenden Wassers ausgebildet ist.
Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung eines Ventiloberteils
a) im Längsteilschnitt,
b) in der Ansicht von unten;

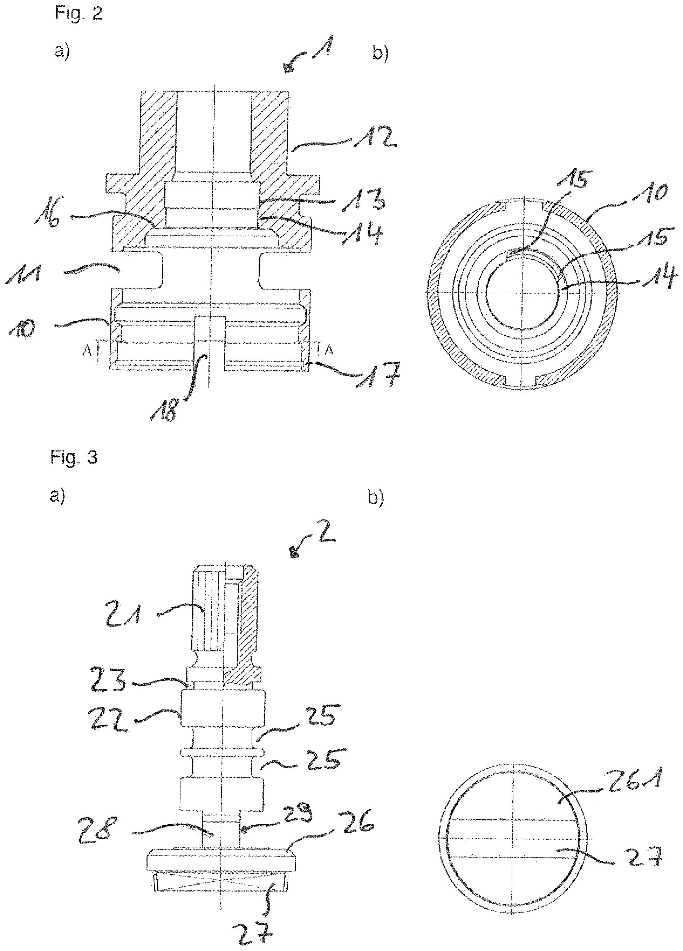

- Figur 2: die schematische Darstellung des Kopfstücks des Ventiloberteil aus Figur 1
a) im Längsschnitt,
b) Im Querschnitt A-A der Darstellung aus a);
- Figur 3: die schematische Darstellung der Spindel des Ventiloberteil aus Figur 1
a) im Längsteilschnitt
b) in der Ansicht von unten;
- Figur 4: die Darstellung der Steuerscheibe des Ventiloberteils aus Figur 1
a) in der Ansicht von unten,
b) in der Draufsicht,
c) im Längsschnitt;
- Figur 5: die Darstellung der Durchlassscheibe des Ventiloberteils aus Figur 1
a) in der Ansicht von unten,
b) im Längsschnitt,
c) in der Draufsicht
d) in einem um 90 Grad zur Darstellung aus b) versetzten Längsschnitt;

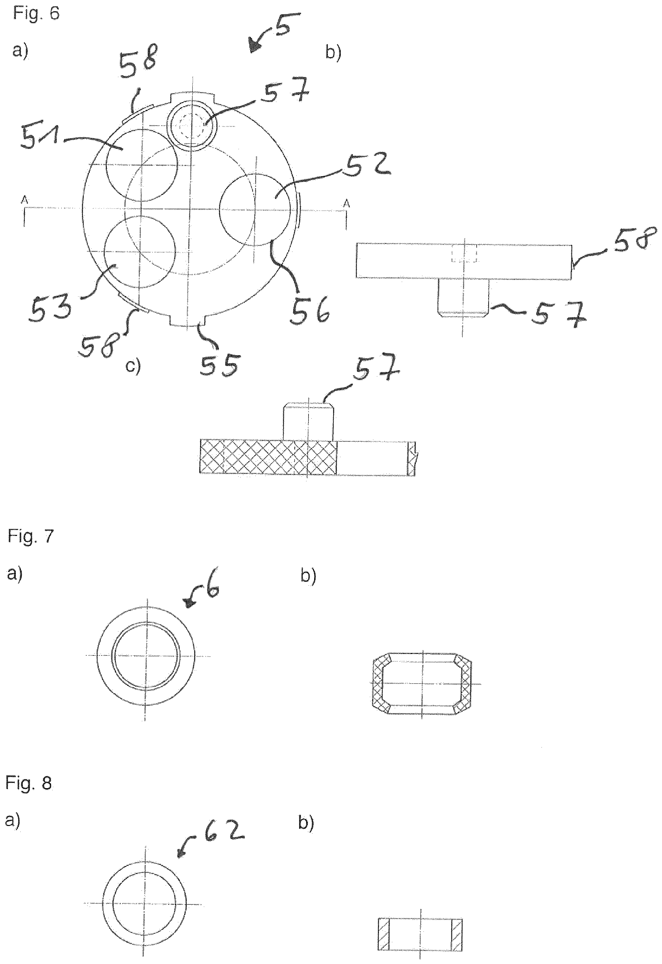

- Figur 6: die Darstellung des Bodenstücks des Ventiloberteils aus Figur 1
a) in der Draufsicht,
b) in der Seitenansicht,
c) im Längsschnitt A-A der Darstellung aus a);
- Figur 7: die Darstellung einer Lippendichtung des Bodenstücks aus Figur 6
a) in der Draufsicht,
b) im Längsschnitt;
- Figur 8: die Darstellung eines Stützrings der Lippendichtung aus Figur 7
a) in der Draufsicht,
b) im Längsschnitt;
- Figur 9:: die schematische Darstellung der Überdeckung von Steuerscheibe und Durchlassscheibe (Scheibensteuerung) des Ventiloberteils aus Figur 1 in der Position
a) Leitungswasserzulauf zu, Filterwasserzulauf zu,
b) Leitungswasserzulauf zu, Filterwasserzulauf auf,
c) Leitungswasserzulauf auf, Filterwasserzulauf auf;
- Figur 10: die schematische Darstellung des Ventilsitzes einer Armatur zur Aufnahme des Ventiloberteils nach Figur 1
a) Im Längsschnitt,
b) In der Draufsicht;
- Figur 11: die schematische Darstellung einer Einbau- und Anschlusssituation eines Ventiloberteils nach Figur 1 in einem Ventilsitz nach Figur 10 mit zwischengeschaltetem Filtermodul;
- Figur 12: die schematische Darstellung eines Ventiloberteils in einer nicht erfindungsgemäßen Ausführungsform
a) im Längsteilschnitt,
b) in der Ansicht von unten;
- Figur 13: die Darstellung der Steuerscheibe des Ventiloberteils aus Figur 12
a) in der Ansicht von unten,
b) in der Draufsicht,
c) im Längsschnitt;
- Figur 14: die Darstellung der Steuerscheibe des Ventiloberteils aus Figur 12 in einer alternativen Ausführungsform
a) in der Ansicht von unten,
b) in der Draufsicht,
c) im Längsschnitt;
- Figur 15: die Darstellung der Durchlassscheibe des Ventiloberteils aus Figur 12
a) in der Ansicht von unten,
b) im Längsschnitt,
c) in der Draufsicht
d) in einem um 90 Grad zur Darstellung aus b) versetzten Längsschnitt;
- Figur 16: die Darstellung des Bodenstücks des Ventiloberteils aus Figur 12
a) in der Draufsicht,
b) in der Seitenansicht,
c) im Längsschnitt A-A der Darstellung aus a);
- Figur 17:: die schematische Darstellung der Überdeckung von Steuerscheibe und Durchlassscheibe (Scheibensteuerung) des Ventiloberteils aus Figur 12 mit einer Steuerscheibe nach Figur 13 in der Position
a) Leitungswasserzulauf auf, Filterwasserzulauf auf,
b) Leitungswasserzulauf zu, Filterwasserzulauf auf,
c) Leitungswasserzulauf zu, Filterwasserzulauf zu;
- Figur 18:: die schematische Darstellung der Überdeckung von Steuerscheibe und Durchlassscheibe (Scheibensteuerung) des Ventiloberteils aus Figur 12 mit einer Steuerscheibe nach Figur 14 in der Position
a) Leitungswasserzulauf auf, Filterwasserzulauf auf,
b) Leitungswasserzulauf zu, Filterwasserzulauf auf,
c) Leitungswasserzulauf zu, Filterwasserzulauf zu;
- Figur 19: die schematische Darstellung des Ventilsitzes einer Armatur mit Seitenauslauf zur Aufnahme des Ventiloberteils nach Figur 12
a) Im Längsschnitt,
b) In der Draufsicht;
- Figur 20: die schematische Darstellung des Ventilsitzes einer Armatur mit bodenseitigem Auslauf zur Aufnahme des Ventiloberteils nach Figur 12
a) Im Längsschnitt,
b) In der Draufsicht;
- Figur 21: die schematische Darstellung einer Einbau- und Anschlusssituation eines Ventiloberteils nach Figur 12 in einem Ventilsitz nach Figur 19 oder Figur 20 mit zwischengeschaltetem Filtermodul.

Das als Ausführungsbeispiel gewählte Ventiloberteil besteht im Wesentlichen aus einem Kopfstück 1, das von einer in ihm radial geführten Spindel 2 mittig durchsetzt ist. Mit der Spindel 2 ist eine Steuerscheibe 3 formschlüssig verbunden und im Kopfstück 1 radial geführt. An dem der Spindel 2 abgewandten Seite der Steuerscheibe 3 ist eine Durchlassscheibe 4 drehfest in dem Kopfstück 1 angeordnet, an das sich ein Bodenstück 5 anschließt. Das Bodenstück 5 ist mit Lippendichtungen 6 versehen, über die das Bodenstück 5 gegen die Durchlassscheibe 4 sowie gegen den Ventilsitz 7 abgedichtet ist. Das Bodenstück 5 "schwebt" somit axial zwischen dem Ventilsitz 7 und der Durchlassscheibe 4.

Das Kopfstück 1 besteht aus einem symmetrischen Hohlkörper, dessen beiden Stirnflächen offen sind. Im Ausführungsbeispiel ist das Kopfstück 1 als Messingdrehteil hergestellt. An seiner dem Bodenstück 5 zugewandten Seite weist das Kopfstück 1 einen hülsenartigen Teil 10 auf, in dem gegenüberliegend zwei Durchtrittsfenster 11 angeordnet sind. Endseitig ist in dem hülsenartigen Teil innen eine umlaufende Rastnut 17 zur Aufnahme einer an das Bodenstück 5 angeformten Rastnase angeordnet. Weiterhin sind endseitig diametral zueinander zwei rechteckförmige Aussparungen 18 zur Aufnahme der Nasen 46, 55 der Durchlassscheibe 4 sowie des Bodenstücks 5 eingebracht.

An seinem den Durchtrittsfenstern 11 gegenüberliegenden Ende weist das Kopfstück 1 einen durchmesserreduzierten Abschnitt 12 auf, in dem innen eine umlaufende Nut 13 eingeformt ist. Die umlaufende Nut 13 begrenzend ist dieser vorgelagert ein dreiviertelkreisförmiger Steg 14 angeformt, durch den zwei radiale Anschläge 15 gebildet sind. Die Anschläge 15 dienen der Drehbegrenzung der Spindel 2. Innen ist durch den durchmesserreduzierten Abschnitt dem Steg 15 ein Absatz 16 gebildet.

Die Spindel 2 ist im Wesentlichen massiv ausgeführt. Sie ist an ihrer dem Kopfstück 1 abgewandten Stirnseite außen als Außenvielkant 21 ausgeführt. Anschließend ist außen an der Spindel 32 eine Zylinderfläche 22 vorgesehen, mit der die Spindel 2 in dem Kopfstück 1 radial geführt ist. Zwischen der Zylinderfläche 22 und dem Außenvielkant 21 ist ein Einstich 23 vorgesehen, in den eine Wellensicherung 24 in Form eines Sprengrings federnd eingelegt ist. Die Wellensicherung 24 verhindert das Eindringen der Spindel 2 in das Kopfstück 1 über das vorgesehene Maß hinaus. Weiterhin sind in der Zylinderfläche 22 zwei Ringnuten 25 eingebracht, die O-Ringe 61 aufnehmen. Auf der dem Außenvielkant 21 entgegengesetzten Seite der Spindel 2 ist eine Scheibe 26 angeformt, die auf ihrer dem Außenvielkant 21 abgewandten Seite einen Mitnehmer 27 aufweist. Den Mitnehmer 27 einfassend ist auf der Scheibe 26 ein durchmesserreduzierter Absatz 261 geringer Höhe angeformt. Zwischen der Zylinderfläche 22 und der Scheibe 26 weist die Spindel einen kreissegmentförmigen Abschnitt 28 auf, dessen gerade Flanken 29 einen Winkel von 45 Grad einschließen. Die Flanken 28 wirken mit den durch den dreiviertelkreisförmigen Steg 14 gebildeten Anschlägen 15 derart zusammen, dass der Drehwinkel der Spindel 2 auf 45 Grad begrenzt ist.

Die Steuerscheibe 3 ist im Wesentlichen als kreisrunde Keramikscheibe ausgebildet, in die beabstandet zu ihrem Außenrand ein Verbindungskanal 31 in Form einer kreisbogenförmige Vertiefung eingebracht ist, die sich über einen Winkel von 90 Grad erstreckt. Dem Durchlasskanal 31 gegenüberliegend ist in die Steuerscheibe ein kreissegmentförmiger Ausschnitt 32 eingebracht, der sich in axialer Richtung etwa über die Hälfte der Mantelfläche 33 der Steuerscheibe 3 erstreckt. Auf ihrer der Spindel 2 zugewandten Seite weist die Steuerscheibe 3 einen quaderförmigen Eingriff 34 zur Aufnahme des Mitnehmers 27 der Spindel 2 auf. Der quaderförmige Eingriff 34 ist durch eine zylinderförmige Einsenkung 35 geringer Tiefe eingefasst, deren Innendurchmesser im Wesentlichen dem Außendurchmesser des von diesem Eingriff 32 aufgenommenen Absatzes 261 der Scheibe 26 der Spindel 2 entspricht.

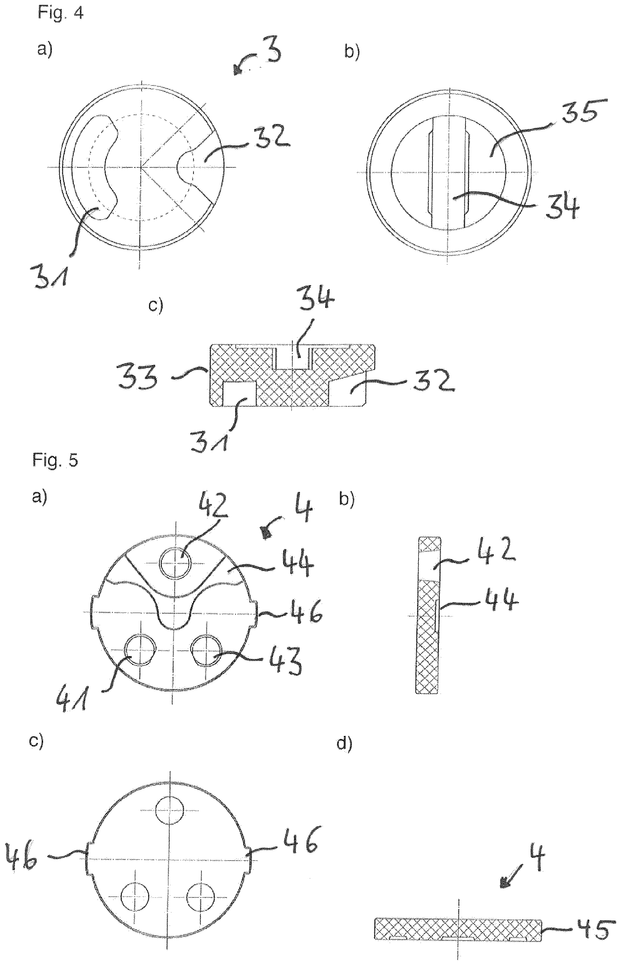

Die Durchlassscheibe 4 ist im Wesentlichen als gegenüber der Steuerscheibe wesentlich dünnere kreisrunde Keramikscheibe ausgebildet, in die beabstandet zueinander drei Bohrungen 41, 42, 43 eingebracht sind. Auf ihrer der Steuerscheibe 3 zugewandten Seite ist in die Durchlassscheibe 4 eine kanalförmige Vertiefung 44 geringer Tiefe eingebracht, die einen die Mitte der Durchlassscheibe 4 umgebenden mittleren Bereich an zwei gegenüberliegend angeordneten Seiten mit der Mantelfläche 45 verbindet, welche die Vertiefung durchbricht (vgl. Fig. 5 a)). Zur drehfesten Fixierung der Durchlassscheibe 4 in dem Kopfstück 1 sind an dieser seitlich diametral zueinander zwei rechteckförmige Nasen 46 zum Eingriff in die Aussparungen 18 des Kopfstücks 1 angeformt.

Das Bodenstück 5 ist im Wesentlichen in Form einer kreisrunden Scheibe ausgebildet. In dem Bodenstück 5 sind jeweils in Form einer Bohrung ein erster Einlasskanal 51 und ein zweiter Einlasskanal 52 sowie ein erster Auslaufkanal 53 eingebracht, deren Mittelachsen ein gleichschenkliges Dreieck begrenzen. Beidseitig der Kanäle 51, 52, 53 sind diese einfassend in das Bodenstück 5 jeweils ringförmige Einsenkungen 56 zur Aufnahme jeweils einer Lippendichtung 6 eingebracht. Die Lippendichtungen 6 nehmen jeweils einen Stützring 62 auf und dichten das Bodenstück gegen die Durchlassscheibe 4 sowie gegen den Ventilsitz 7 einer Armatur ab. Seitlich sind an dem Bodenstück 5 diametral zueinander zwei rechteckförmige Nasen 55 zum Eingriff in die Aussparungen 18 des Kopfstücks 1 angeformt. Seitlich der Nasen 55 sind weiterhin Rastnasen 58 zum Eingriff in die Rastnut 17 des Kopfstücks 1 angeformt. Diese Rastnasen 58 ermöglichen eine Rastverbindung zwischen dem Bodenstück 5 und dem Kopfstück 1.An seiner dem Kopfstück 1 abgewandten Unterseite ist an dem Bodenstück 5 weiterhin ein Positionierstift 57 zum Eingriff in eine mit diesem korrespondierende Positionierbohrung 75 des Ventilsitzes 7 einer Armatur angeformt.

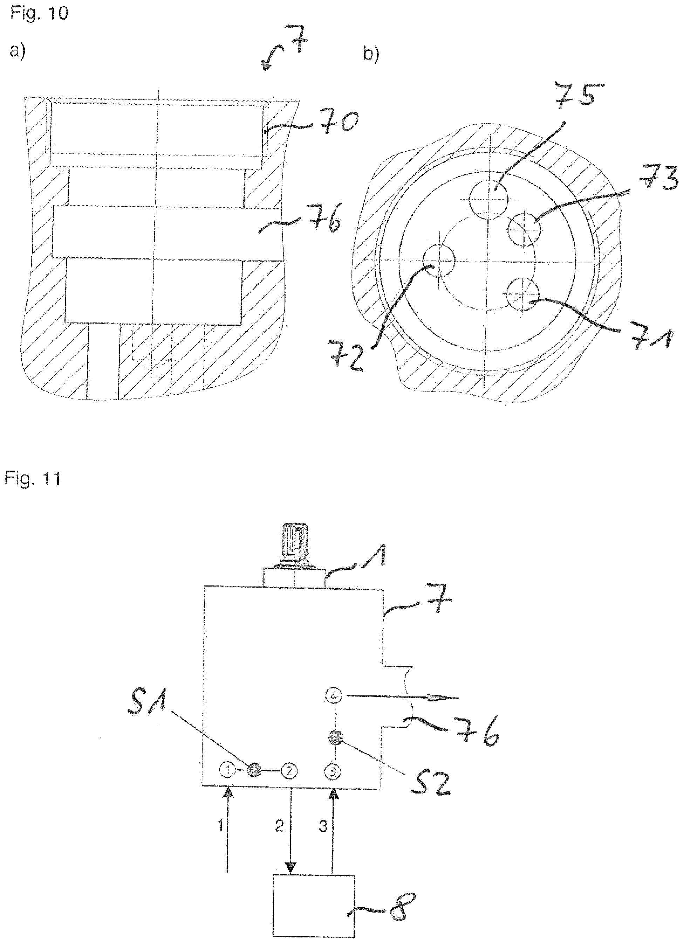

In Figur 10 ist beispielhaft der Ventilsitz 7 einer Armatur zur Aufnahme des zuvor beschriebenen Ventiloberteils dargestellt. Der Ventilsitz 7 ist im Wesentlichen hohlzylinderförmig ausgebildet. An seinem oberen Ende ist ein Innengewinde 70 zum Einschrauben eines - nicht dargestellten - Befestigungsrings zur Fixierung eines Ventiloberteils angeordnet. Bodenseitig münden in dem Ventilsitz 7 ein Leitungswasserzulaufanschluss 71, ein Filtermodulzulaufanschluss 72 sowie ein Filtermodulauslaufanschluss 73, deren Mittelachsen ein gleichschenkliges Dreieck begrenzen. Weiterhin ist eine als Sacklochbohrung ausgebildete Positionierbohrung 75 zur Aufnahme des Positionierstiftes 57 des Bodenstücks 5 des Ventiloberteils eingebracht. Seitlich mündet in den Ventilsitz 7 eine Auslaufleitung 76, die etwa in Höhe der Durchtrittsfenster 11 des Kopfstücks 1 eines aufgenommenen Ventiloberteils angeordnet ist.

In Figur 11 sind die unterschiedlichen Schließstellungen schematisch dargestellt. Das Leitungswasser (Pfeil 1) gelangt über die erste Sperrstelle S1 in das Filtermodul 8 (Pfeil 2) und von hier aus (Pfeil 3) über die zweite Sperrstelle S2 in die Auslaufleitung 76 der Armatur.

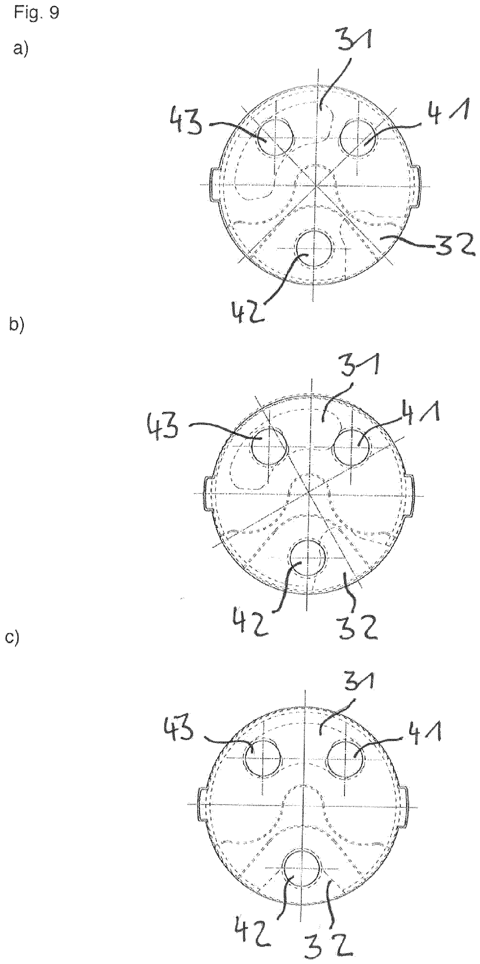

In Figur 9 sind verschiedene Stellungen der aus der über die Spindel 2 drehbaren Steuerscheibe 3 und der drehfest angeordneten Durchlassscheibe 4 gebildeten Scheibensteuerung schematisch dargestellt. In der Stellung gemäß Figur 9 a) ist die mit dem ersten Einlasskanal 51 des Bodenstücks 5 fluchtende erste Bohrung 41 sowie die mit dem zweiten Einlasskanal 52 des Bodenstücks 5 fluchtende zweite Bohrung 42 der Durchlassscheibe 4 von der Steuerscheibe 5 überdeckt. Der Leitungswasserzulauf (Sperrstelle S1) sowie der Filtermodulauslauf 8 (Sperrstelle S2) sind verschlossen. Es findet kein Wasserdurchlauf statt (geschlossene Stellung).

In der Stellung der Scheibensteuerung gemäß Figur 9 b) ist gegenüber der Stellung in Figur 9 a) die mit dem zweiten Einlasskanal 52 des Bodenstücks 5 fluchtende zweite Bohrung 42 der Durchlassscheibe 4 partiell von dem Ausschnitt 32 der Steuerscheibe 3 verbunden, wodurch der Filtermodulauslauf geöffnet ist (Sperrstelle S2 ist geöffnet). In dieser Stellung ist ein Druckausgleich des Filtermoduls 8 über den Filtermodulauslauf bei gleichzeitig verschlossenem Leitungswasserzulauf ermöglicht (Druckausgleichstellung).

In der Stellung gemäß Figur 9 c) sind die mit dem ersten Einlasskanal 51 des Bodenstücks 5 fluchtende erste Bohrung 41 und die mit dem ersten Auslaufkanal 53 des Bodenstücks 5 fluchtende dritte Bohrung 43 über den Verbindungskanal 31 der Steuerscheibe 3 verbunden, wodurch das Leitungswasser in das Filtermodul 8 fließen kann (Sperrstelle S1 ist geöffnet). Auch die mit dem zweiten Einlasskanal 52 des Bodenstücks 5 fluchtende zweite Bohrung 42 der Durchlassscheibe 4 ist mit dem Ausschnitt 32 der Steuerscheibe 3 verbunden (Sperrstelle S2 ist geöffnet), wodurch ein Auslauf des Leitungswassers aus dem Filtermodul 8 durch das Durchtrittsfenster 11 des Kopfstücks 1 ermöglicht ist, welches Leitungswasser sodann in die Auslaufleitung 76 des Ventilsitzes 7 gelangt (geöffnete Stellung).

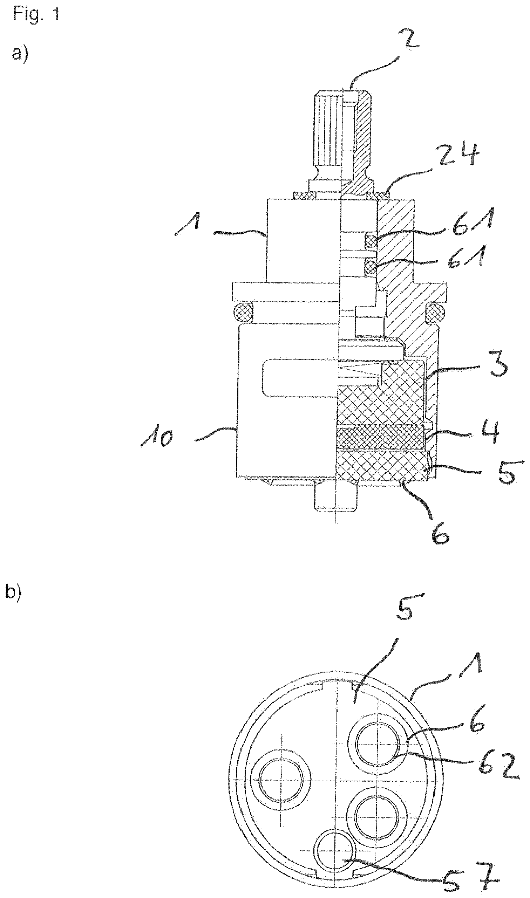

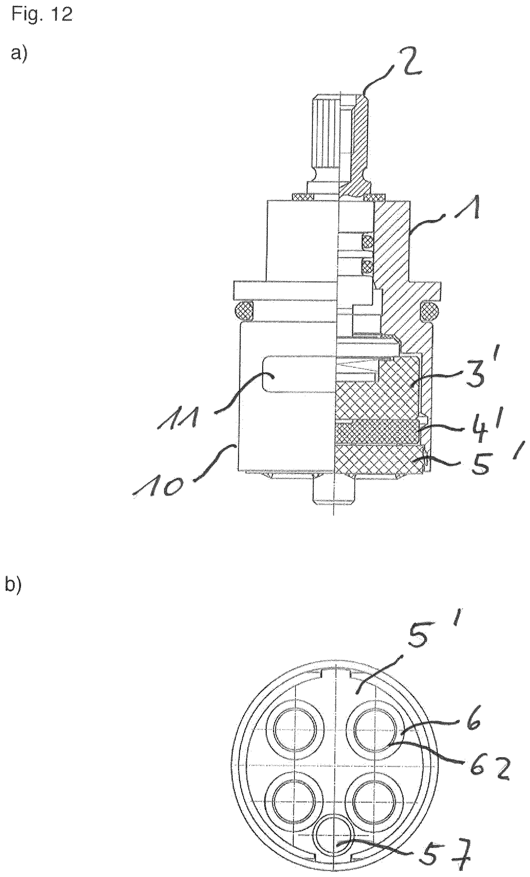

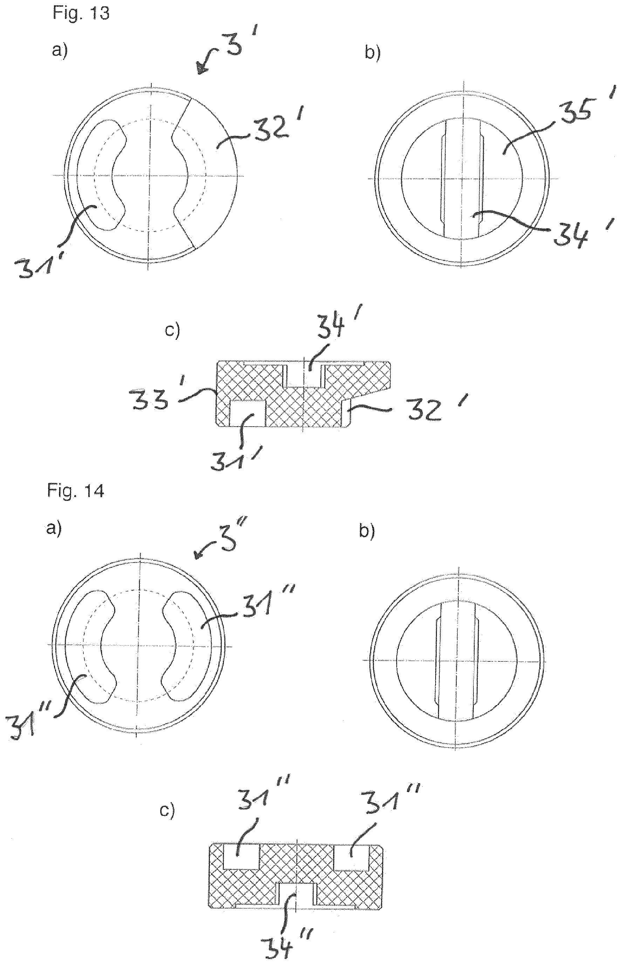

In Figur 12 ist ein Ventiloberteil in einer weiteren Ausführungsform dargestellt. Diese Ausführungsform unterscheidet sich von dem zuvor beschriebenen Ventiloberteil durch die abweichende Gestaltung von der Steuerscheibe 3, der Durchlassscheibe 4 sowie des Bodenstücks 5. Diese abgewandelten Bauteile werden nachfolgend im Einzelnen beschrieben, wobei deren Bezugszeichen zur Kennzeichnung des abgewandelten Ausführungsbeispiels mit einem bzw. zwei Hochkommata versehen sind:
Die Steuerscheibe 3' gemäß diesem weiteren Ausführungsbeispiel (vgl. Figur 13) ist ebenfalls im Wesentlichen als kreisrunde Keramikscheibe ausgebildet, in die beabstandet zu ihrem Außenrand ein Durchlasskanal 31' in Form einer kreisbogenförmige Vertiefung eingebracht ist. Dem Verbindungskanal 31' gegenüberliegend ist in die Steuerscheibe 3' ein kreissegmentförmiger Ausschnitt 32' eingebracht, der sich in axialer Richtung etwa über die Hälfte der Mantelfläche 33' der Steuerscheibe 3' erstreckt. Im Vergleich zu dem Ausführungsbeispiel gemäß Figur 1 ist der kreissegmentartige Ausschnitt 32' wesentlich größer ausgebildet. Dieser erstreckt sich nunmehr über einen Winkel von 120 Grad. Die der Spindel 2 zugewandte Seite der Steuerscheibe 3' ist mit der Steuerscheibe 3 gemäß Figur 1 identisch ausgebildet.

In Figur 14 ist eine alternative Ausgestaltung der Steuerscheibe 3' für das Ventiloberteil nach Figur 12 gezeigt. Bei dieser Steuerscheibe 3" ist an Stelle des kreissegmentartigen Ausschnitts 32' ein zweiter Verbindungskanal 31" diametral gegenüber dem ersten Verbindungskanal 31" angeordnet.

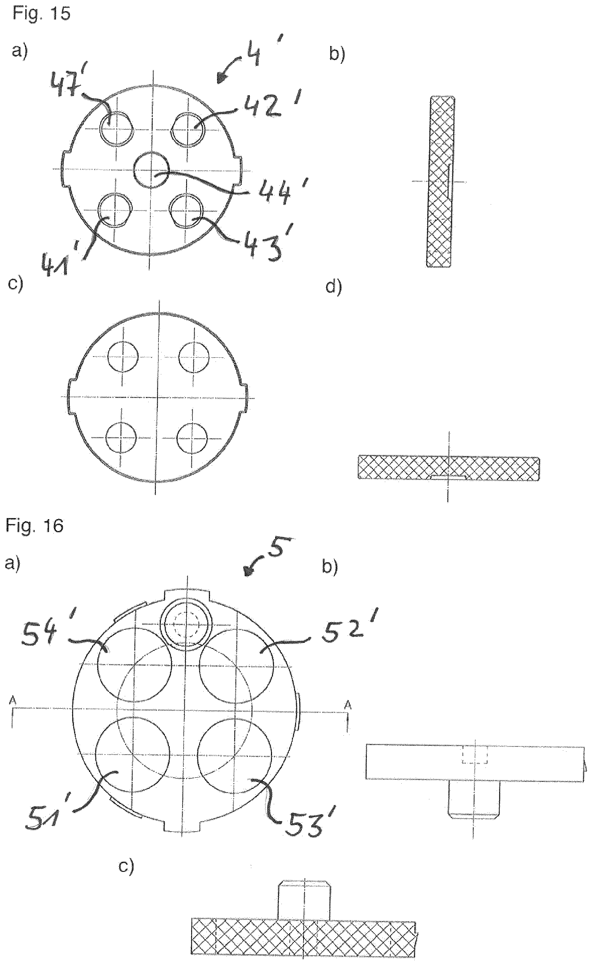

Die Durchlassscheibe 4' ist im Wesentlichen entsprechend der Durchlassscheibe 4 des Ausführungsbeispiels gemäß Figur 1 ausgebildet, wobei hier jedoch eine zusätzliche vierte Bohrung 47' eingebracht ist. Die vier Bohrungen 41', 42', 43', 47' sind derart angeordnet, dass deren Mittelpunkte ein Quadrat begrenzen. Weiterhin ist die Vertiefung 44' bei dieser Durchlassscheibe 4' kreisrund ausgebildet und mittig auf ihrer der Steuerscheibe 3' zugewandten Seite der Durchlassscheibe 4' positioniert (vgl. Figur 15).

Das Bodenstück 5' ist ebenfalls im Wesentlichen entsprechend der Bodenstück 5 des Ventiloberteils nach Figur 1 ausgebildet, wobei entsprechend zur Gestaltung der Durchlassscheibe 4' ebenfalls eine zusätzliche Bohrung in Form eines zweiten Auslaufkanals 54' eingebracht ist. Die beiden Einlasskanäle 51', 52' und die beiden Auslaufkanäle 53', 54' sind derart angeordnet, dass sie mit den vier Bohrungen 41', 42', 43', 47' der Durchlassscheibe 4' fluchten.

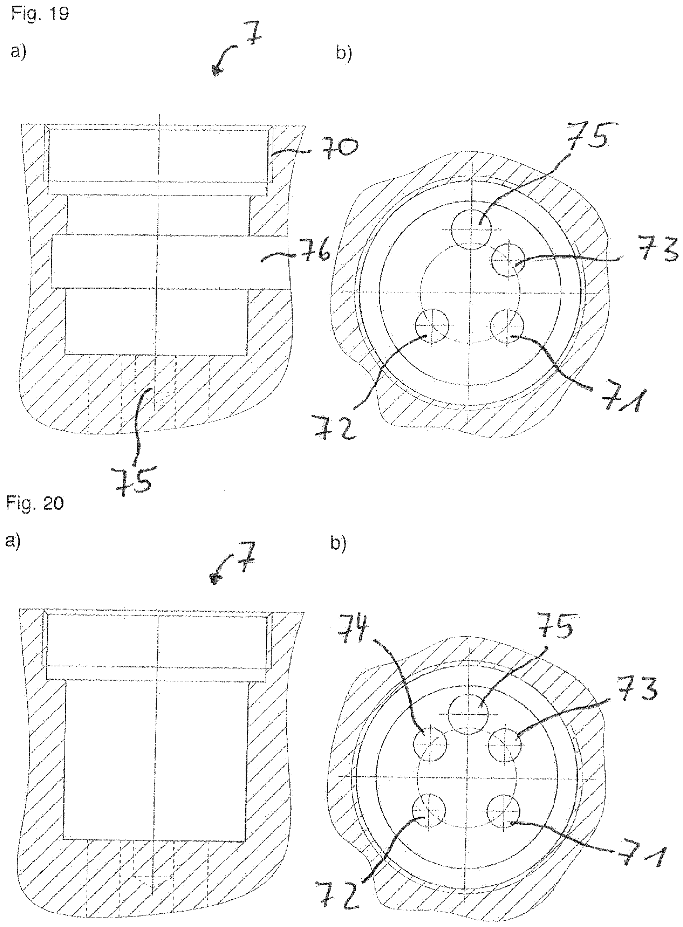

In den Figuren 19 und 20 sind beispielhafte Ventilsitze einer Armatur zur Aufnahme des Ventiloberteils nach Figur 12 dargestellt. Während der Ventilsitz nach Figur 19 im Wesentlichen dem zuvor beschriebenen Ventilsitz nach Figur 10 zur Aufnahme des Ventiloberteils nach Figur 1 entspricht, ist bei dem Ventilsitz nach Figur 20 anstelle der seitlichen Auslaufleitung 76 bodenseitig ein zusätzlicher Leitungswasserauslaufanschluss 74 angeordnet.

Beim Einsatz des Ventiloberteils nach Figur 12 in einem Ventilsitz gemäß Figur 19 ist der zweite Auslaufkanal 54' des Bodenstücks 5' durch den Grund des Ventilsitzes 7 versperrt. Das Leitungswasser gelangt über den vergrößert ausgebildeten kreissegmentförmigen Ausschnitt 32' der Steuerscheibe 3' durch das Durchtrittsfenster 11 des Kopfstücks 1 des Ventiloberteils in die seitlich angeordnete Auslaufleitung 76.

Beim Einsatz des Ventiloberteils nach Figur 12 in einem Ventilsitz gemäß Figur 20 ist das Durchtrittsfenster 11 des Kopfstücks 1 des Ventiloberteils durch die Seitenwand des Ventilsitzes 7 versperrt; der zweite Auslaufkanal 54' des Bodenstücks 5' ist direkt mit dem bodenseitigen Leitungswasserauslaufanschluss 74 des Ventilsitzes verbunden.

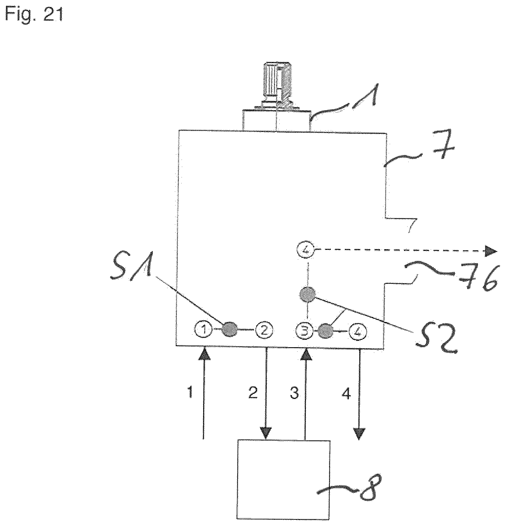

In Figur 21 sind die unterschiedlichen Schließstellungen schematisch dargestellt. Das Leitungswasser (Pfeil 1) gelangt über die erste Sperrstelle S1 in das Filtermodul 8 (Pfeil 2) und von hier aus (Pfeil 3) über die zweite Sperrstelle S2 entweder über ein Durchtrittsfenster 11 in die Auslaufleitung 76 des Ventilsitzes 7 der Armatur (gestrichelter Pfeil) oder aber direkt in den bodenseitigen Leitungswasserauslaufanschluss 74 (Pfeil 4). Die Steuerscheibe 3" gemäß Figur 14 ermöglicht lediglich den Wasseraustritt über den Leitungswasserauslaufanschluss 74.

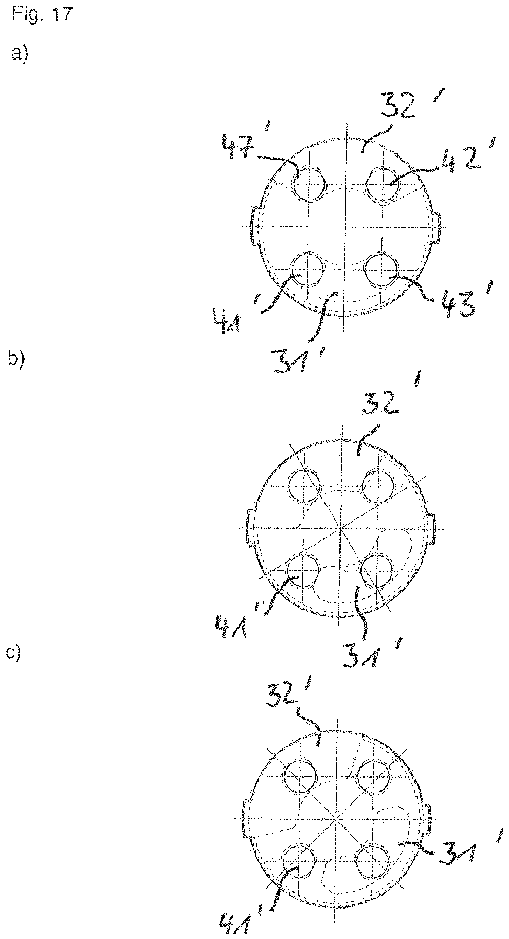

In Figur 17 sind verschiedene Stellungen der aus der Steuerscheibe 3' in der Ausführung gemäß Figur 13 und der drehfest angeordneten Durchlassscheibe 4' gebildeten Scheibensteuerung des Ventiloberteils gemäß Figur 12 schematisch dargestellt.

In der Stellung gemäß Figur 17 a) sind die mit dem ersten Einlasskanal 51' des Bodenstücks 5' fluchtende erste Bohrung 41' und die mit dem ersten Auslaufkanal 53' des Bodenstücks 5 fluchtende dritte Bohrung 43' über den Verbindungskanal 31' der Steuerscheibe 3 verbunden, wodurch das Leitungswasser in das Filtermodul 8 fließen kann (Sperrstelle S1 ist geöffnet). Auch die mit dem zweiten Einlasskanal 52' des Bodenstücks 5' fluchtende zweite Bohrung 42' der Durchlassscheibe 4' ist mit dem Ausschnitt 32' der Steuerscheibe 3' verbunden (Sperrstelle S2 ist geöffnet), wodurch ein Auslauf des Leitungswassers aus dem Filtermodul 8 - je nach Gestaltung des Ventilsitzes 7 - durch das Durchtrittsfenster 11 des Kopfstücks 1 oder durch den mit dem Leitungswasserauslaufanschluss 74 verbundenen zweiten Auslaufkanal 54' des Bodenstücks 5' ermöglicht ist (geöffnete Stellung).

In der Stellung der Scheibensteuerung gemäß Figur 17 b) ist gegenüber der Stellung in Figur 17 a) die mit dem zweiten Einlasskanal 52' des Bodenstücks 5' fluchtende zweite Bohrung 42' der Durchlassscheibe 4' mit dem Ausschnitt 32' der Steuerscheibe 3' verbunden, wodurch der Filtermodulauslauf geöffnet ist (Sperrstelle S2 ist geöffnet). In dieser Stellung ist ein Druckausgleich des Filtermoduls 8 über den Filtermodulauslauf bei gleichzeitig verschlossenem Leitungswasserzulauf ermöglicht (Druckausgleichstellung).

In der Stellung der Scheibensteuerung gemäß Figur 17 c) ist die mit dem ersten Einlasskanal 51' des Bodenstücks 5' fluchtende erste Bohrung 41' sowie die mit dem zweiten Einlasskanal 52' des Bodenstücks 5' fluchtende zweite Bohrung 42' der Durchlassscheibe 4' von der Steuerscheibe 5' überdeckt. Der Leitungswasserzulauf (Sperrstelle S1) sowie der Filtermodulauslauf (Sperrstelle S2) sind verschlossen. Es findet kein Wasserdurchlauf statt (geschlossene Stellung).

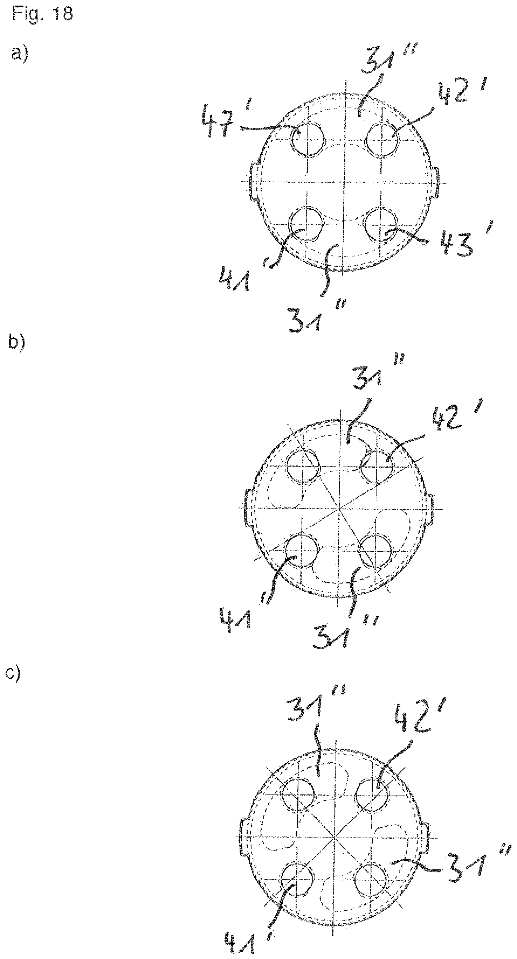

In Figur 18 sind verschiedene Stellungen der aus der Steuerscheibe 3" in der Ausführung gemäß Figur 14 und der drehfest angeordneten Durchlassscheibe 4' gebildeten Scheibensteuerung des Ventiloberteils gemäß Figur 12 schematisch dargestellt. Die Stellungen gemäß den Figuren 18 a) bis c) entsprechen dabei den Stellungen gemäß den Figuren 17 a) bis c), wobei in Figur 18 a) die mit dem zweiten Einlasskanal 52' des Bodenstücks 5' fluchtende zweite Bohrung 42' der Durchlassscheibe 4' über den Verbindungskanal 31" der Steuerscheibe 3' mit der mit dem zweiten Auslaufkanal 54' des Bodenstücks 5' fluchtenden vierten Bohrung 47' verbunden ist, wodurch ein Auslauf des Leitungswassers aus dem Filtermodul ausschließlich durch die mit dem Leitungswasserauslaufanschluss 74 verbundene zweite Auslaufbohrung 54' des Bodenstücks 5' ermöglicht ist (geöffnete Stellung). In Figur 18 b) wird die mit dem zweiten Einlasskanal 52' des Bodenstücks 5' fluchtende zweite Bohrung 42' der Durchlassscheibe 4' mit von dem Verbindungskanal 31" der Steuerscheibe 3" verbunden.

## Patentansprüche

1. Ventiloberteil für Sanitärarmaturen, umfassend ein Kopfstück, das ein zwei Einlasskanäle und wenigstens einen ersten Auslaufkanal aufweisendes Bodenstück aufnimmt, sowie eine Scheibensteuerung mit einer Steuerscheibe, welche über eine drehbar gelagerte Spindel relativ zu einer drehfest angeordneten Durchlassscheibe verdrehbar ist, wobei ein zweiter Auslaufkanal für die Wasserentnahme angeordnet ist, wobei in der Steuerscheibe (3) eine Verbindungskanal (31) eingebracht ist, über die ein erster Einlasskanal (51) und der erste Auslaufkanal (53) in einer Drehstellung der Steuerscheibe (3) relativ zur Durchlassscheibe (4) verbindbar ist, **dadurch gekennzeichnet, dass** die Durchlassscheibe (4) auf ihrer der Steuerscheibe (3) zugewandten Seite eine Vertiefung (44) aufweist, welche einen die Mitte der Durchlassscheibe (4) umgebenden mittleren Bereich an wenigstens einer Seite mit der Mantelfläche (45) verbindet.

2. Ventiloberteil nach Anspruch 1, **dadurch gekennzeichnet, dass** der Verbindungskanal (31) kreisbogenförmig ausgebildet ist.

3. Ventiloberteil nach Anspruch 1 oder 2, **dadurch gekennzeichnet, dass** der zweite Auslaufkanal durch wenigstens ein in dem Kopfstück (1) eingebrachtes seitliches Fenster (11) gebildet ist, wobei in der Steuerscheibe (3) ein Ausschnitt (32) eingebracht ist, über den der zweite Einlasskanal (52) mit dem seitlichen Fenster (11) des Kopfstücks (1) in einer Drehstellung der Steuerscheibe (3) verbindbar ist.

4. Ventiloberteil nach Anspruch 1 oder 2, **dadurch gekennzeichnet, dass** der zweite Auslaufkanal (54) zusätzlich zu dem ersten Auslaufkanal (53) in dem Bodenstück (5) angeordnet ist, wobei in der Steuerscheibe zwei Verbindungskanäle (31) eingebracht sind, über die der erste Einlasskanal (51) und der erste Auslaufkanal (53) in einer Drehstellung der Steuerscheibe (3) relativ zur Durchlassscheibe (4) sowie der zweite Einlasskanal (52) und der zweite Auslaufkanal (54) in einer Drehstellung der Steuerscheibe (3) relativ zur Durchlassscheibe (4) verbindbar sind.

5. Ventiloberteil nach Anspruch 3 oder 4, **dadurch gekennzeichnet, dass** der Verbindungskanal (31) und der Ausschnitt (32) bzw. die beiden Verbindungskanäle (31) derart in der Steuerscheibe (3) angeordnet sind, dass in einer Drehstellung der Steuerscheibe (3) relativ zur Durchlassscheibe (4) der erste Einlasskanal (51) geschlossen ist, während der zweite Auslaufkanal (54) zumindest partiell mit dem zweiten Einlasskanal (52) verbunden ist, wobei in einer weiteren Drehstellung sowohl der erste Einlasskanal (51), als auch der zweite Einlasskanal (52) geschlossen sind.

6. Ventiloberteil nach einem der vorgenannten Ansprüche, **dadurch gekennzeichnet, dass** die Vertiefung (44) derart ausgebildet ist, dass sie die Mantelfläche (45) der Durchlassscheibe (4) an zwei beabstandet zueinander angeordneten Stellen durchdringt, wobei sie durch den mittleren Bereich der Durchlassscheibe (4) geführt ist.

7. Ventiloberteil nach Anspruch 6, **dadurch gekennzeichnet, dass** die zwei beabstandet zueinander angeordneten Stellen der Mantelfläche (45) gegenüberliegend angeordnet sind.

8. Ventiloberteil nach einem der vorgenannten Ansprüche, **dadurch gekennzeichnet, dass** das Kopfstück (1) aus Metall, vorzugsweise aus Messing hergestellt ist.

9. Ventiloberteil nach einem der vorgenannten Ansprüche, **dadurch gekennzeichnet, dass** innerhalb des Kopfstücks (1) zwei Anschläge (15) angeordnet sind, durch welche die Rotation der Spindel (2) auf einen Drehwinkel begrenzt ist.

10. Ventiloberteil nach Anspruch 9, **dadurch gekennzeichnet, dass** die Spindel (2) einen kreissektorförmigen Abschnitt (28) aufweist, der zwei winklig zueinander angestellte gerade Flanken (29) aufweist, die an jeweils einen Anschlag (15) des Kopfstücks (1) anschlagbar sind, wodurch der Drehwinkel der Spindel (2) begrenzt ist.

11. Ventiloberteil nach Anspruch 10, **dadurch gekennzeichnet, dass** die Flanken (29) einen Winkel von 45 Grad einschließen und derart mit den Anschlägen (15) des Kopfstücks zusammenwirken, dass der maximale Drehwinkel der Spindel (2) auf 45 Grad begrenzt ist.

12. Sanitärarmatur mit einem Ventilsitz, das ein Ventiloberteil nach einem der vorgenannten Ansprüche aufnimmt, wobei der Ventilsitz (7) einen Leitungswasserzulauf- (71) sowie einen Filtermodulzulauf- (72) und einen Filtermodulauslaufanschluss (73) aufweist, wobei der Leitungswasserzulaufanschluss (71) mit dem ersten Einlasskanal (51), der Filtermodulzulaufanschluss (72) mit dem ersten Auslaufkanal (53) und der Filtermodulauslaufanschluss (73) mit dem zweiten Einlasskanal (52) des Bodenstücks (5) des Ventiloberteils verbunden ist.

## Claims

1. Valve top for sanitary fittings comprising a head part holding a bottom part incorporating two inlet ducts and at least one outlet duct and a disk control system having a control disk that can be turned relative to a co-rotatably arranged passage disk, where a second outlet duct is arranged for water draw-off, where a connecting duct (31) is provided in the control disk (3) by means of which connecting duct (31), when the control disk (3) is turned to a set position, a first inlet duct (51) and the first outlet duct (53) can be connected to each other relative to the passage disk (4), **characterised in that** the passage disk (4) incorporates on its side oriented towards the control disk (3) a recess (44) that on at least one side connects a middle area surrounding the middle of the passage disk (4) to the outer surface (45).

2. Valve top in accordance with claim1, **characterised in that** the connecting duct (31) is constructed arc-shaped.

3. Valve top in accordance with claim 1 or 2, **characterised in that** the second outlet duct is formed by at least one side window (11) formed in the head part (1), where in the control disk (3) a cut-away section (32) is provided by means of which, when the control disk (3) is turned to a set position, the second inlet duct (52) can be connected to the side window (11) of the head part (1).

4. Valve top in accordance with claim 1 or 2, **characterised in that** in addition to the first outlet duct (53) the second outlet duct (54) is arranged in the bottom part (5), where in the control disk two connecting ducts (31) are provided by means of which, when the control disk (3) is turned to a set position, the first inlet duct (51) and the first outlet duct (53) can be connected to each other relative to the passage disk (4) and, when the control disk (3) is turned to a set position, the second inlet duct (52) and the second outlet duct (54) can be connected to each other relative to the passage disk (4).

5. Valve top in accordance with claim 3 or 4, **characterised in that** the connecting duct (31) and the cut-away portion (32) or the two connecting ducts (31) are arranged in the control disk (3) in such a way that, when the control disk (3) is turned to a set position relative to the passage disk (4), the first inlet duct (51) is closed, while the second outlet duct (54) is at least partly connected to the second inlet duct (52), where, when the control disk (3) is turned to a set position, both the first inlet duct (51) and the second inlet duct (52) are closed.

6. Valve top in accordance with any one of the foregoing claims, **characterised in that** the recess (44) is constructed in such a way that it runs through the outer surface (45) of the passage disk (4) at two places set a distance apart and is run through the middle area of the passage disk (4).

7. Valve top in accordance with claim 6, **characterised in that** the two places set a distance apart on the outer surface (45) are arranged opposite one another.

8. Valve top in accordance with any one of the preceding claims, **characterised in that** the head part (1) is made of metal, preferably of brass.

9. Valve top in accordance with any one of the foregoing claims, **characterised in that** two stops (15) are arranged inside the head part (1) by means of which stops (15) the rotation of the spindle (2) is limited to a pivot angle.

10. Valve top in accordance with claim 9, **characterised in that** the spindle (2) incorporates an arc-shaped section (28) incorporating two straight flanks (29) set at an angle to each other, each of which straight flanks (29) can hit against a stop (15) in the head part (1), so limiting the pivot angle of the spindle (2).

11. Valve top in accordance with claim 10, **characterised in that** the flanks (29) enclose an angle of 45 degrees and co-act with the stops (15) in the head part in such a way that the maximum pivot angle of the spindle (2) is limited to 45 degrees.

12. Sanitary fitting with a valve seat that receives an valve top in accordance with any one of the foregoing claims, where the valve seat (7) incorporates a mains water feed connection (71) and a filtration module feed connection (72) and a filtration module outlet connection (73), where the mains water feed connection (71) is connected to the first inlet duct (51), the filtration module feed connection (72) to the first outlet duct (53) and the filtration module outlet connection (73) to the second inlet duct (52) in the bottom part (5) of the valve top.

## Revendications

1. Partie supérieure de soupape pour robinetteries sanitaires, comprenant une pièce têtière recevant une pièce de fond qui présente deux canaux d'admission et au moins un premier canal de sortie, ainsi qu'une commande composée d'un disque de commande pouvant tourner, via une broche en appui rotatif, relativement à un disque de passage disposé sans pouvoir tourner, sachant qu'est disposé un deuxième canal de sortie pour le prélèvement d'eau, sachant que dans le disque de commande (3) a été ménagé un canal de liaison (31) via lequel il est possible de relier un premier canal d'admission (51) et le premier canal de sortie (53) lorsque le disque de commande (3) se trouve en position tournée par rapport au disque de passage (4), **caractérisée en ce que** le disque de passage (4) présente, sur son côté regardant le disque de commande (3), un creux (44) qui relie sur au moins un côté une zone médiane - entourant le milieu du disque de passage (4) - avec la surface enveloppante (45).

2. Partie supérieure de soupape selon la revendication 1, **caractérisée en ce que** le canal de liaison (31) est configuré en arc de cercle.

3. Partie supérieure de soupape selon la revendication 1 ou 2, **caractérisée en ce que** le deuxième canal de sortie est formé par au moins une fenêtre (11) latérale ménagée dans la pièce têtière (1), sachant que dans le disque de commande (3) a été ménagé une découpe (32) via laquelle le deuxième canal d'admission (52) peut être relié avec la fenêtre latérale (11) de la pièce têtière (1) lorsque le disque de commande (3) se trouve dans une position tournée.

4. Partie supérieure de soupape selon la revendication 1 ou 2, **caractérisée en ce que** le deuxième canal de sortie (54) est disposé en plus du premier canal de sortie (53) dans la pièce de fond (5), sachant que dans le disque de commande sont ménagés deux canaux de liaison (31) via lesquels le premier canal d'admission (51) et le premier canal de sortie (53) sont reliables lorsque le disque de commande (3) se trouve en position tournée relativement au disque de passage (4) et via lesquels le deuxième canal d'admission (52) et le deuxième canal de sortie (54) sont reliables lorsque le disque de commande (3) se trouve en position tournée relativement au disque de passage (4).

5. Partie supérieure de soupape selon la revendication 3 ou 4, **caractérisée en ce que** le canal de liaison (31) et la découpe (32) ou les deux canaux de liaison (31) sont disposés dans le disque de commande (3) de sorte que lorsque le disque de commande (3) se trouve en position tournée relativement au disque de passage (4), le premier canal d'admission (51) est fermé tandis que le deuxième canal de sortie (54) est au moins partiellement relié avec le deuxième canal d'admission (52), sachant que dans une autre position tournée aussi bien le premier canal d'admission (51) que le deuxième canal d'admission (52) sont fermés.

6. Partie supérieure de soupape selon l'une des revendications précédentes, **caractérisée en ce que** le creux (44) est configuré de sorte à traverser la surface enveloppante (45) du disque de passage (4) à deux endroits distants l'un de l'autre, sachant qu'il est guidé à travers la zone médiane du disque de passage (4).

7. Partie supérieure de soupape selon la revendication 6, **caractérisée en ce que** les deux endroits de la surface enveloppante (45) distants l'un de l'autre sont agencés l'un en face de l'autre.

8. Partie supérieure de soupape selon l'une des revendications précédentes, **caractérisée en ce que** la pièce têtière (1) est fabriquée en métal, de préférence en laiton.

9. Partie supérieure de soupape selon l'une des revendications précédentes, **caractérisée en ce qu'**à l'intérieur de la pièce têtière (1) sont disposées deux butées (15) qui limitent la rotation de la broche (2) à un angle de rotation.

10. Partie supérieure de soupape selon la revendication 9, **caractérisée en ce que** la broche (2) présente un segment (28) en forme de secteur circulaire qui présente deux flancs droits (29) inclinés selon un angle l'un par rapport à l'autre, flancs qui peuvent venir heurter une butée (15) respective de la pièce têtière (1), faisant que l'angle de rotation de la broche (2) est limité.

11. Partie supérieure de soupape selon la revendication 10, **caractérisée en ce que** les flancs (29) incluent un angle de 45 degrés et interagissent avec les butées (15) de la pièce têtière de sorte que l'angle de rotation maximum de la broche (2) est limité à 45 degrés.

12. Robinetterie sanitaire avec un siège de soupape recevant une partie supérieure de soupape selon l'une des revendications précédentes, sachant que le siège de soupape (7) présente un raccord (71) d'arrivée d'eau courante, ainsi qu'un raccord (72) d'arrivée pour module filtrant et un raccord (73) de sortie pour module filtrant, sachant que le raccord (71) d'arrivée d'eau courante est relié avec le premier canal d'admission (51), le raccord (72) d'arrivée pour module filtrant est relié avec le premier canal de sortie (53) et le raccord (73) de sortie pour module filtrant est relié avec le deuxième canal d'admission (52) de la pièce de fond (5) de la partie supérieure de soupape.
